# EUROPEAN PATENT APPLICATION

(11) **EP 2 369 266 A2**
(43) Date of publication of application: **28.09.2011**
(21) Application number: 11157771.4
(22) Date of filing: 10.03.2011
(51) Int. Cl.: F24J 2/52

(54) **Integrated panel roof assembly**

(30) Priority: 10.03.2010 GB 1004002; 12.03.2010 GB 1004111
(71) Applicant: SADEF N.V., 8830 Hooglede-Gits (BE)
(72) Inventor: Depauw, Marc, 8610 Kortemark (BE)
(74) Representative: Bird, William Edward

(57) **Abstract**

The present invention relates to systems, methods and components for building integration of panels such as photovoltaic panels or cells (BiPV), solar panels based on circulation of air or water through the panels for heating purposes or insulating roof panels or similar. The present invention can be used with any roofing structures such as shade structures, canopies, car ports, covered car parks, bus stop roofs, train station roofs, awnings, arenas, some warehouses, etc.

An assembly is described for forming a cover on a roofing structure comprising horizontal first support members and panels, the assembly comprising:
a plurality of rectangular panels having ends and sides, the panels being for arrangement in a first row and a second row
second support members for attachment to at least one side of each of the panels, the second support members having outwardly extending flanges at a lower side thereof for support of the sides of the panels, the second support members extending along the complete sides of the panels, and
fixing means for fixing the second support members to an underlying first support member, wherein the second row of panels is for arrangement in a shingled manner with the first row of panels.

## Description

The present invention relates to systems, methods and components for building integration of panels such as photovoltaic panels or cells (BiPV), solar panels based on circulation of air or water through the panels for heating purposes or insulating roof panels or similar. The present invention can be used with any roofing structures such as shade structures, canopies, car ports, covered car parks, bus stop roofs, train station roofs, awnings, arenas, some warehouses, etc.

### Background

There are many building installations on which solar or voltaic panels can be mounted. When the panels are mounted above an existing roof there is no need for the panels to provide water tightness. However if the panels replace the roofing tiles in domestic or industrial buildings then the panels must provide absolute water tightness. There are however applications for solar or voltaic panels such as for shade structures, car ports, awnings, arenas, rigid canopies or other coverings over areas such as for storage of equipment or vehicles, some warehouses, for which absolute water tightness is not a requirement.

Solar or voltaic panels on any roofing structure must be secured such as to withstand wind and snow loadings. For some of the applications mentioned above, such as car ports, the wind force can be upwards, downwards or sideways. The structure must also be strong enough to support the weight of maintenance workers.

A purlin (or purline) is a horizontal structural member in a roof. Purlins support the loads from the roof deck or sheathing and are supported by the principal rafters and/or the building walls, steel beams etc. The use of purlins, as opposed to closely spaced rafters, is common in pre-engineered metal building systems. Buildings or structures having galvanized steel structural members are less subject to decay from fungus or insect attack or water rot than structures made with wooden beams.

US 7 01288 describes a framing system for solar panels in which an upper row of panels overlaps a lower row of panels (shingled arrangement). The solar panels are carried on horizontal battens supported on sloping rafters. The sides and ends of the solar panels are provided with special frame elements. The sides of the solar panels include glazing strips for receiving the sides of solar laminates. The spaces between adjacent solar panels in a row are covered by a snap fitting cover. The overlap section between an upper and a lower solar panel is formed by special end frame elements. These include glazing seals for the solar laminate.

WO 2007/079584 also describes an overlapping (shingled) arrangement of solar panels. A lower part of the panels clips into a track The upper edge of a lower panel is overlapped by the lower portion of the adjacent upper panel. The panels can slide along the track. Methods of sealing are not described in detail.

EP 0 599 497 describes a roof system utilizing solar cell panels, the system comprising a plurality of intermediate connecting members arranged on an upper surface of a roof deck and running in the sloping direction. The intermediate connecting members are arranged along the roof. First and second modular panels are mounted between the intermediate connecting members.

A water-proof plate or similar is laid on the roof deck. Each of the intermediate connecting members comprises at least one connecting element and a connecting member cover. The connecting element is for connecting the intermediate connecting member with the water-proof plate or similar. There are means for connecting first modular panels with second modular panels or for interconnecting two first modular panels. The connecting member cover covers the upper portion of the intermediate connecting member.

For assembling the intermediate connecting member, it is first secured to the roof deck along the slope direction. A connecting bolt is then inserted into the connecting element. Each nut of the corresponding connecting bolt is tightened to fix the connecting element.

In order to install the first and the second modularpanels, the intermediate connecting members are arranged on the roof deck in the slope direction. The water-proof plate is laid on the roof deck and is inserted into the connecting element.

Subsequently, the first and the second modular panels are disposed on the upper portion of the water-proof plate. The lower end of a side jamb of each panel is inserted into a portion of the connecting element.

In addition, to connect the first and the second modular roof members 4 and 5 in the slope direction, fixture engaging pieces of each panel engage with and are secured to an engaging hook having an inverse L-shaped formed on the upper surface of the intermdiate connecting member. Subsequently, the covering pieces are installed.

Solar or voltaic panels are offered on the market usually with an aluminium frame. It is advantageous if a design of roof structure can be used with commercially available solar or voltaic panel sizes and constructions rather than requiring proprietary frames which are designed to work with proprietary fixing designs.

### Summary of the Invention

The present invention provides an assembly for forming a cover on a roofing structure comprising horizontal first support members and panels, the assembly comprising:
a plurality of rectangular panels having ends and sides, the panels being for arrangement in a first row and a second row
second support members for attachment to at least one side of each of the panels, the second support members having outwardly extending flanges at a lower side thereof for support of the sides of the panels, the second support members extending along the complete sides of the panels, and
fixing means for fixing the second support members to an underlying first support member, wherein the second row of panels is for arrangement in a shingled manner with the first row of panels.

Preferably each panel is enclosed in an outer supporting frame, e.g. preferably a metal outer support frame.

The first support members preferably have retaining means distributed along an upper surface of the first support members. Preferably these retaining means are distributed over a length of each panel, e.g. there can be two, three or more discrete retaining means spaced along the first support member. For example the retaining means can be provided by hooks that are formed integrally with the first support members, e.g. by cold rolling. That is the retaining means can be a hook extending away from the first support member and being open so that a flange of the panels locates within the open space of the hook.

The first support members preferably have an upper support surface, e.g. formed by a flange. The first support members also preferably have a lower flange that can be used as a cable tray or for other utilities. The profile of the first support members is preferably open to allow access to the various surfaces of the first support members. The profile of the first support members can be a Z profile, Sigma (Σ) profile, a C or C+ profile, for example.

In embodiments of the present invention the second support members have a tubular cross-sectional shape, having two vertical sides and two outwardly extending bottom flanges. In some embodiments the second support members have a structurally reinforcing profile that is located on the side of the outwardly extending bottom flanges that is opposite from the vertical walls.

In the assembly the two outwardly extending bottom flanges preferably each include a drainage gutter. Preferably the drainage gutter is arranged in the assembly such that condense water from the underside of a first row of panels or infiltrated rain water is transferred to the upperside of a row of adjacent panels that lies below the first row of panels.

To provide a seal between rows of panels, an elastomeric strip for sealing engagement between a lower surface of an upper panel and an upper surface of a lower panel in an overlap zone of the shingled arrangement of panels can be provided.

To provide more support to the panels the second support members in an assembly with a first and a second row can overlap each other and can be attached to each other to form a continuous beam.

In an embodiment the second support members of one row of panels are co-linear with second support members in at least one other row.

The panels can be photovoltaic panels, solar heating panels, insulating panels, skylights or mixtures of these. The panels can be mounted on top of a watertight roof.

Embodiments of the present invention comprise a number of roof elements e.g. tiles such as glass or solar panels, each with a supporting frame outside or around it, e.g. a metallic frame. Thus in embodiments of the present invention each of these roof elements such as glass or solar panels has all around a metallic frame 6. Due to this metallic frame 6, it is possible to mount the element in superposition, i.e. shingled, and also lock them directly to other support elements such as element 4 in the connection 10, in order to have a quick and safe montage. Thus the roof elements such as solar or glass panels are already foreseen with an integrated metallic frame all around so additional external support elements are not required. This reduces the number of separate elements that have to be managed on the roof. In embodiments of the present invention profile 12 lays on top of the profile 12 of the lower layer. This allows to connect with only 1 long bolt 18, the 2 profiles 12 to the understructure 4. The roof elements such as glass or solar panels are overlapping each other so that water streaming from ridge to gutter, will simply stream on top of the underlaying panel, and so naturally not enter into the building. Hence in embodiments of the present invention the roof is a watertight roof even after mounting of the panels. The system can be mounted on top of a watertight roof.

An additional feature is that the roof elements such as solar or glass panels do not lay in a crossed position, but a profile 12 lays in line with the underneath profile 12.

An additional feature is that the roof element such as glass or solar panel tile is locked against sliding movement downwards by an upward perforation 10 in the flange of the underlaying beam 4, and the roof element locks directly by its integrated frame all around in the supporting beam 4. This reduces the number of elements required to complete the roof. The roof element 2 is locked directly into the supporting beam 4 which leads to less material and faster montage.

Embodiments of the present invention are suitable for use with large roof elements, e.g. solar panels up to 2m long or more, and the supporting beam 12 is provided in order to support the long side of the solar panel.

### Brief Description of the drawings

Fig. 1 shows a general arrangement of panels on a sloping rood fixed in a shingled manner according to an embodiment of the present invention.
Fig. 2a-c show how a panel is clipped into a hook on a purlin and how an upper row of panels is sealed to a lower row according to an embodiment of the present invention.
Figs. 3a to c show how a second support member is arranged and attached to a panel according to an embodiment of the present invention.
Fig. 4 shows how a seal is applied to an upper surface of a panel.
Fig. 5 shows how a weather strip is attached to a second support member according to an embodiment of the present invention.
Fig. 6 shows how two overlapped rows of panels are secured to a purlin according to an embodiment of the present invention.
Fig. 7 shows in another view how two overlapped rows of panels are secured to a purlin according to an embodiment of the present invention.
Fig. 8 shows in yet another view how two overlapped rows of panels are secured to a purlin according to an embodiment of the present invention.
Fig. 9 shows how a first row of panels are secured to a purlin according to an embodiment of the present invention.
Fig. 10 shows how weather strips are secured to panels according to an embodiment of the present invention.
Fig. 11 shows how a second row of panels is secured according to an embodiment of the present invention.
Fig. 12 shows how a weather strip is secured to asecond row of panels according to an embodiment of the present invention
Fig. 13 shows how second support members are overlapped and attached to each other according to an embodiment of the present invention.
Figs. 14 to 19 shows various profile designs for the second support member according to an embodiment of the present invention.

### Description

There is a need to provide a cost effective modular installation for a roofing or other building structures. The present invention relates to building integration of panels such as photovoltaic panels or cells (BiPV). However the present invention is not limited thereto but can include the integration of solar panels based on circulation of air or water through the panels for heating purposes or insulating roof panels. The present invention can be used with any roofing structures such as shade structures, car ports, bus stop roofs, train station roofs, canopies, covered car parks, awnings, arenas, some warehouses, etc.

In an embodiment, the present invention provides an assembly of a modified purlin or purlins with components for securing panels such as solar heating panels or photovoltaic panels or insulating panels (or mixtures thereof) in an overlapping or shingled arrangement in an efficient and cost effective way. Although a roof is exemplified with photovoltaic panels, such assemblies could be mounted as part of a wall or other structure as well and could include other panel types.

The assembly according to embodiments of the present invention is scaleable and modular such that it can be used for small or large installations and does not require an underlying sealed roof. The invented assembly is easy to install and includes few components. It reduces erection time and transportation costs.

The flexibility of the design allows the use of standard and/or commercially available panels such as photovoltaic panels or also allows the possibility of assembling a separate photovoltaic module within a frame.

Panels can be arranged in rows with some water proofing materials in between adjacent panels. Supporting interconnection pieces are provided to assist in joining one panel to another and in securing the panels to the purlins. Electrical connections or mechanical connections to pipes can be provided in a conventional manner, e.g. by trailing these on flanges of the purlins.

Advantages of the proposed assembly are numerous. The assembly is strong and load bearing and the cost of transportation and installation is reduced. Installation time is reduced. Weight is reduced.

The interconnectivity of the panels to the support members such as purlins can be used in an assortment of other arrangements, such as for the walls of a building. In these applications as well as a roofing applications, the panels can form part or the entire roof, wall or the like depending on the structure design.

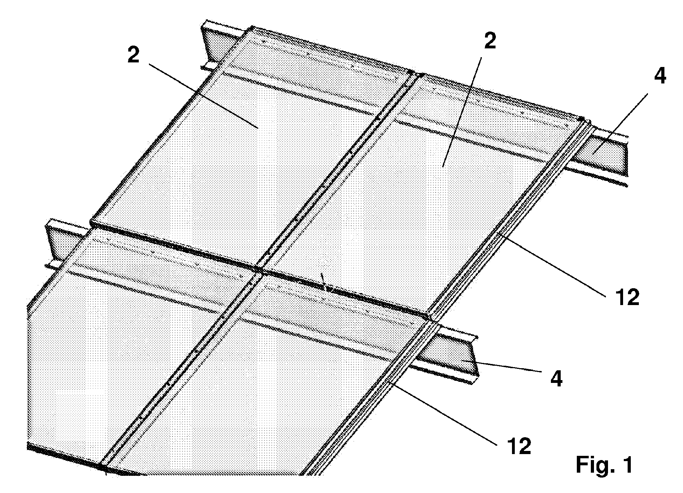

Fig. 1 shows a general arrangement of rows of panels 2 in shingled arrangement and supported on first support members 4 such as purlins. The purlins are shown horizontal as is typically the case for steel framed buildings. The purlins are fixed at each and optionally at other points to walls or supports of the building as is conventional. The first support members 4 can be any suitable structural members having an upper surface such as an upper flat flange onto which the panels 2 can rest. Preferably the purlin profile also has a lower flange that can be used for cable trays or for other utilities. Preferably the purlin profile is open so that structures can be secured to the upper flange by bolts and access to bolt heads or nuts is easy due to the open profile. Suitable profiles can be Sigma (Σ), C or C+, or Z such as are often used for purlins and are often made of steel, e.g. cold rolled and galvanized steel profiles. Additional structural members may also be used such as tie-rods or sag-rods or braces fixed between the purlins to hold these straight and parallel. The panels can be voltaic panels but other panels can be used such as solar heating panels or insulating panels or skylights.

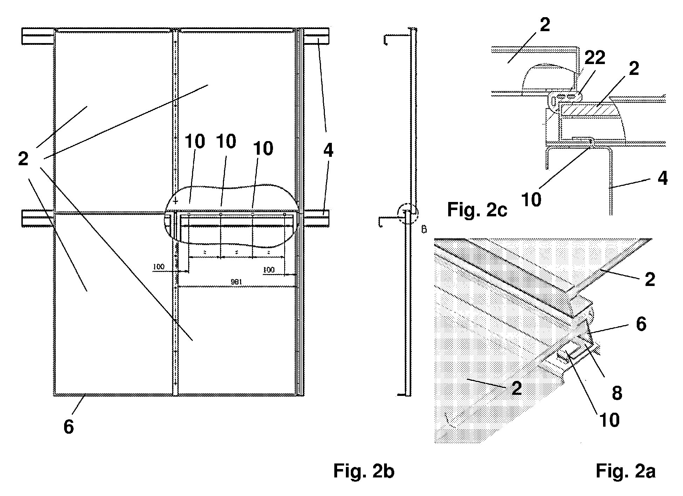

As shown in Fig. 2 especially in Fig. 2a the panels preferably include a circumferential frame 6 as is typical for photovoltaic panels. The frame can be of aluminium. A horizontal flange 8 of this frame 6 at the upper end of the panel 2 is preferably located into a retaining means such as a hook 10 that is affixed to or is formed from the upper flange of the first support member 4, e.g. by being stamped out. Stamping out such a hook can be easily included in a steel cold rolling process. Preferably the retaining means is formed integrally with the first support member in one piece, e.g. a hook that is formed by stamping in a cold-rolling process. The hook 10 is open upwards so that the natural weight of the panel 2 will allow this lower panel to slide into the space of the hook 10. As shown in Fig. 2b a plurality of retaining means e.g. hooks 10, are preferably spaced apart along the upper flange of the first support member 4. It is preferred if there are plurality of discrete retaining means distributed along the upper surface of the first support member such that there are at least two or at least three retaining means such as hooks in a length of the first support member that is less than the width of one panel. By having at least two or at least three discrete retaining means such as hooks, the weight of each panel is distributed better than when at least tone or two retaining means are used per panel.

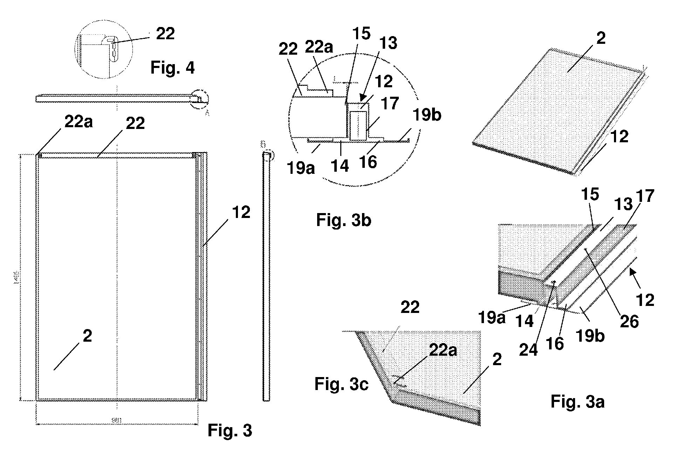

As shown in Fig. 3, on one side of each panel 2, a second support member 12 is placed. This support member 12 is attached to the side of a panel 2 by an attachment means or material 15, e.g. by an adhesive such as provided by double sided structural adhesive tape. The second support member 12 may be applied to one side of the panels 2 at a remote location and shipped in an assembled form to site. Alternatively the second support member 12 can be fixed to the panel 2 on site. Any of these methods avoids that the second support member is individually manipulated on the roof itself. This reduces installation time and increases safety as less manipulations need to be made by installers operating from ladders or scaffolding. The second support member 12 also has a surface 17 that faces the side of another adjacent panel in a row of finished panels.

The purpose of the second support member is to provide support to the panel 2 along the long side of rectangular panel in the portrait position, e.g. the long side parallel with the slope of a roof. If the reactangular panels 2 are in the protrait position with the longest edge parallel with the slope of the roof then the distance between purlins is large thus reducing the number of purlins that are required, and also reducing the purlin material cost, and purlin mounting time. As shown in Figs. 3a and b, the second support member 12 has two flanges 14, 16 extending from its base. Each flange 14, 16 will be located below a respective panel 2 in the final assembly and will support that respective panel. A second support member 12 runs the length of each side of each panel 2 and provides mechanical support to the panel especially when this is in the "portrait" position. The second support member 12 preferably has a profile that is shaped to have high rigidity, i.e. to have a high moment of bending inertia such that it is stiff and can support loads while being light in weight. It is preferably made of a light structural material such as aluminium, plastic such as glass fiber reinforced plastic or from cold rolled steel. The second support member 12 can be made by extrusion of aluminium or plastic for example or cold rolling of steel sheet. As shown the profile of the second support member has a rectangular tubular cross-sectional shape, having an upper surface 13 that can be flat, two vertical sides and the two outwardly extending bottom flanges 14 and 16. The extreme part of flange 14 facing away from the central vertical wall of the second support member 12 is thinner than the part of flange 14 adjacent thereto and forms a gutter 19a for run off of water. The water runs onto the upper surface of a lower row of panels 2 or into a gutter of the building. Similarly the extreme part of flange 16 is also thinner and forms a gutter 19b.

With the panels retained, e.g. hooked into the purlins and attached together to the second support members 12, the next sealing operation is between a lower row of panels 2 and an upper row. At the upper end of a lower panel 2 an elastomeric sealing strip 22 is placed as shown in Fig. 3b, Fig. 3c and in detail in Fig. 4. The elastomeric sealing strip can be adhesive, e.g. it has an adhesive on one or two sides, e.g. above and below. As the upper row of panels 2 overlaps the lower row of panels 2 the overlap zone can be used to form a seal (see also Fig. 2c). The overlap zone is located immediately above each purlin. The elastomeric strip 22 will seal between the upper surface of the lower panel 2 and the bottom surface of the flange 8 of the lower edge of the circumferential frame of the upper panel 2. Each end 22a of the sealing strip 22 is reduced in thickness so as to provide a space for location of the flanges 14 and 16 of the second support member 12 of another upper panel row.

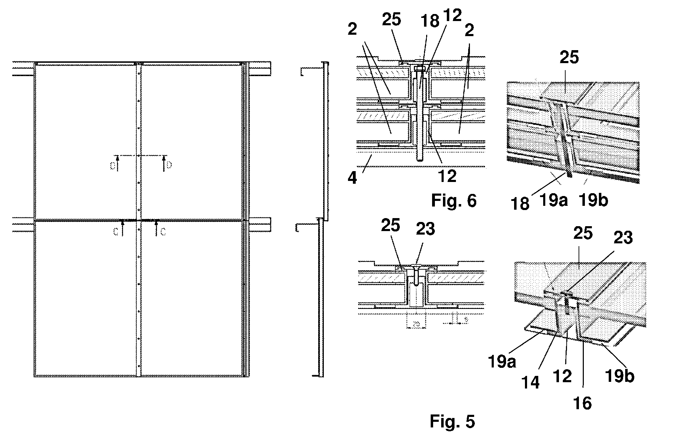

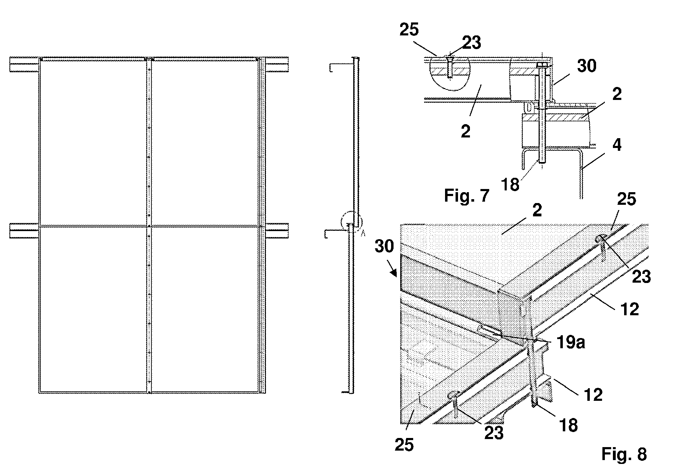

It is now necessary to make a secure connection to the purlins. Each second support member 12 has holes 24 located at the ends. These holes 24 in the final assembly are immediately above the upper flange of a supporting purlin. A self-tapping screw or bolt or similar fixing means 18 such as a snap fit bolt or a bolt and nut is then fixed through the hole 24 and secured to the underlying purlin as shown in cross-section in Fig. 6. In the overlap zone between upper and lower rows of panels 2 the fixing means 18 passes through the upper and lower second support members 12 and extends to the underlying purlin 4. The same construction is shown in side-cross-section in Fig. 7. When the purlin has an open section there is adequate access to fit and tighten a nut to the bottom of bolt 18 if required.

To seal of the upper surface of the second support member 12 a weather strip 25 is fixed to the upper flat surface of the second support member 12 (Fig. 5) by means of fixing means such as screws 23 that screw into holes 26 (Fig. 3a). The weather strip 25 may be made of a suitable weather and UV resistant material, e.g. carbon loaded plastic or metal such as aluminium or galvanised steel. The weather strip preferably extends sideways sufficiently far so that it overlaps the panels 2 on either side of the second support member 12 to which it is attached. The overlaps onto the adjacent panels secure these panels and prevents that wind loading underneath the panels can force the panels vertically upwards.

Weather strip 25 may contain 2 grooves for sealing material (e.g. elastomer) in order to prevent water infiltration between element 25 and 2.

Plastic facings 30 can be fixed to the lower vertical exposed surfaces of panels 2 as shown in Figs. 7 and 8 while leaving an opening for gutter 19a as best shown in Fig. 8.

In case condensed water forms on the underside of the panels 2, this can stream downward in the direction of the roof slope, and can be caught by the flange 8 of the panel frame at the underside of the panel. This underside flange 8 is preferably perforated at both ends, so that water streams through these openings into the gutter-flange 19a, 19b of the second support member 12.

The second support member has at both sides a drain gutter 19a or b, which leads the water to the upperside of the adjacent lower panel, i.e. the one lying underneath the upper panel, or into a gutter on the roof if there is no lower panel. In this way condensation water on the underside of the panel is collected, and transferred safely to the upperside of the adjacent lower laying panel or into a gutter on the roof if there is no lower panel.

The present invention can be used with solar or voltaic panels that are offered on the market. These usually have an aluminium frame. The design of roof structure according to the present invention can be completed with commercially available solar or voltaic panel sizes and constructions and does not require complex proprietary external frames which are designed to work with proprietary fixing designs.

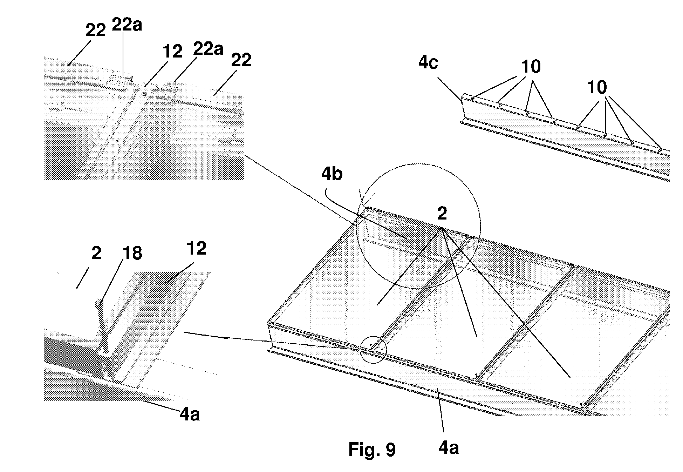

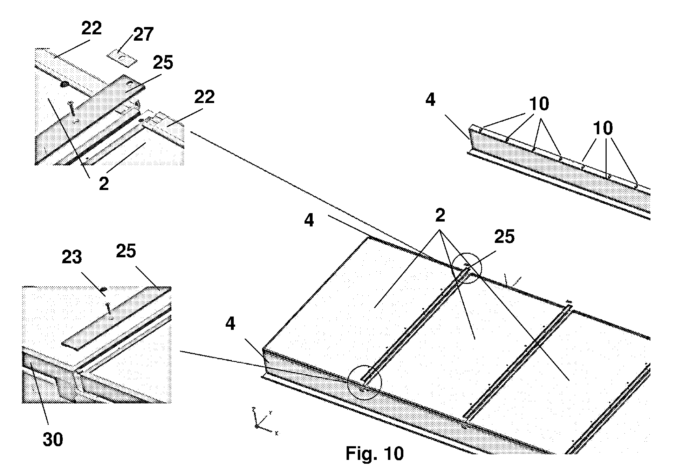

A method of assembly will now be described based on the description above concerning Figs. 1 to 8. In Fig. 9 three purlins are shown 4a, b, c which are arranged in a horizontal manner to form a part of a sloping roof or cover. The purlins shown have a Z profile but other suitable profiles such as Sigma (Σ), C or C+, profiles could be used. At least the purlins 4b and 4c have retaining means 10 at distributed positions on the upper flange surface of these purlins. Panels 2 are then, in sequence located on purlins 4a and b using retaining means 10 such as hooks to prevent the panels from sliding down. Preferably there are at least two or at least three or more discrete retaining means such as hooks per panel. In between the each of the panels 2 a second support member 12 is located and is attached at at least one side to a side of an adjacent panel by means of the attachment material 15. The lower flanges 14, 16 of each second support member 12 support the sides of the panels 2. The attachment of the second support member 12 to a panel 2 can be done at a remote location or on site. The attachment of the sealing member 22 to the panel 2 can be done at remote location or on site. Then suitable fixing means 18 such as a bolt are attached through the lower ends of second support member 12 to fix the panels to the purlin 4a. Bolt 18 is fixed before placing the next laterally located panel 2 in order to have easy access to that bolt while also securing the part of the row already constructed. As shown in Fig. 10 weather strips 25 are now fixed to the upper surface of the second support member 12 e.g. using screws 23. A sealant piece 27 can be used to seal between the second support member 12 of a lower and one of an upper row at the top end of the weather strip 25. A row of secured panels has now been created which are stable and can be used by the assembly crew as a part of the roof.

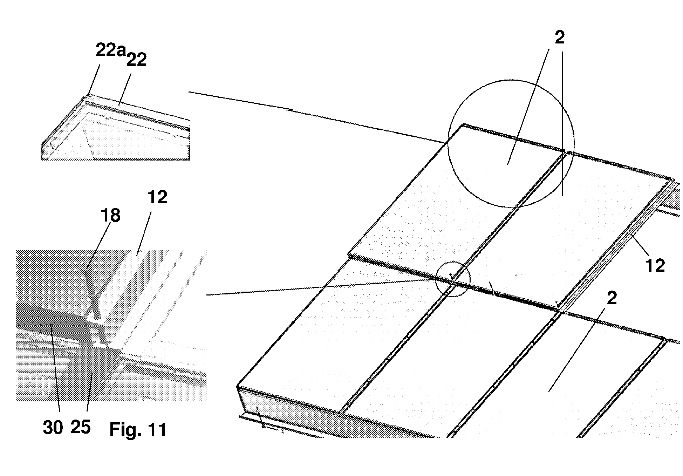

Fig. 11 shows the formation of a second upper row of panels 2. These panels 2 are, in sequence located on purlins 4c using retaining means 10 such as hooks to prevent the panels from sliding down. In between each of the panels 2 of the upper row a second support member 12 is located and is attached on at least one side to a side of an adjacent panel by means of the attachment material 15. The lower flanges 14, 16 of each second support member 12 support the sides of the panels 2. The preparation on remote or on site of the solar panels 2 with a sealing strip 22 at the upper side of the solar panel, means that after mounting of another row of panels, e.g. a second row, there is an automatic waterproof or sealed zone between the upper side of the lowest row of panels, and the underside of the 2^{nd} row of panels.

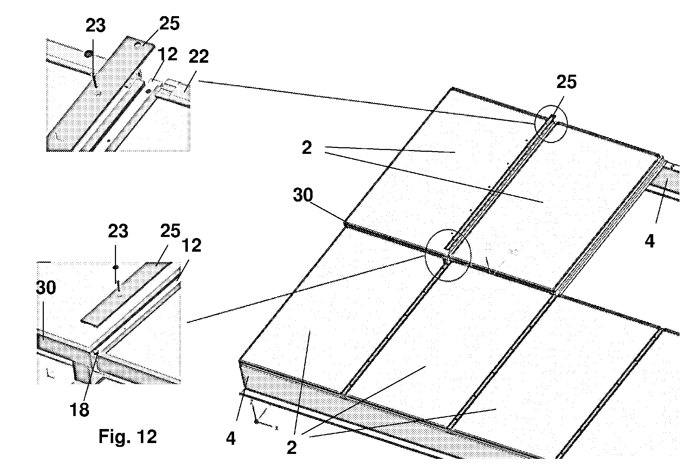

Then suitable fixing means 18 such as a bolt are attached through the lower ends of second support member 12 to fix the panels to the purlin 4b passing through the second support members 12 of the lower row. This fixing means 18 is preferably applied to last second support member that has been installed. This means that there is easy access to this fixing means from the forward edge of the completed section of the row. As shown in Fig. 12 weather strips 25 are fixed to the upper surface of second support members 12 by means for example of screws 23. The weather strips 25 extend laterally onto th panels 2 in order to hold these down and to prevent updrafts from lifting off the panels. Also facings such as 30 may be applied to complete the assembly.

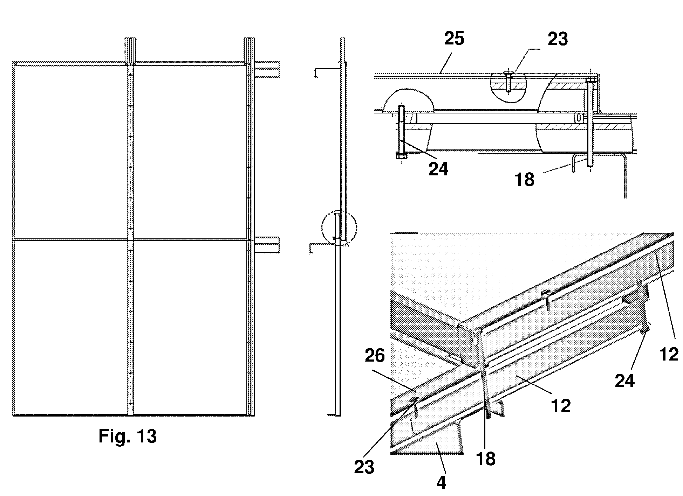

Various amendments to the above described embodiments can be envisaged by the skilled person and any such amendments are part of the present invention. For example Fig. 13 shows an overlapping arrangement of the secondary support members 12 which increases the rigidity and strength of these.

The arrangement is generally as described for Fig. 8 but in this embodiment the lower second support member 12 is extended so that there is a significant overlap of the upper and lower second support members. Optionally an additional fixing means such as an additional bolt 24 can be provided which attaches the lower second support member 12 to the upper support member 12 in addition to the fixing means 18 already described. By attaching the upper and lower second support members to each other an effective continuous beam is produced which is much stronger and has less sag.

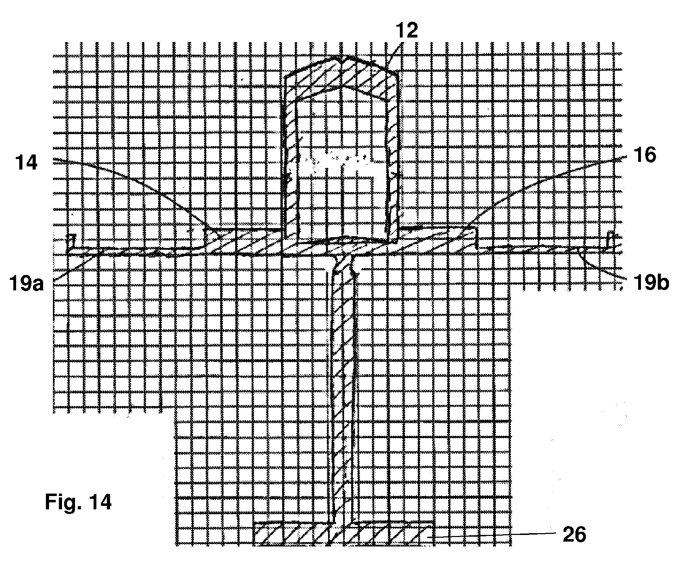

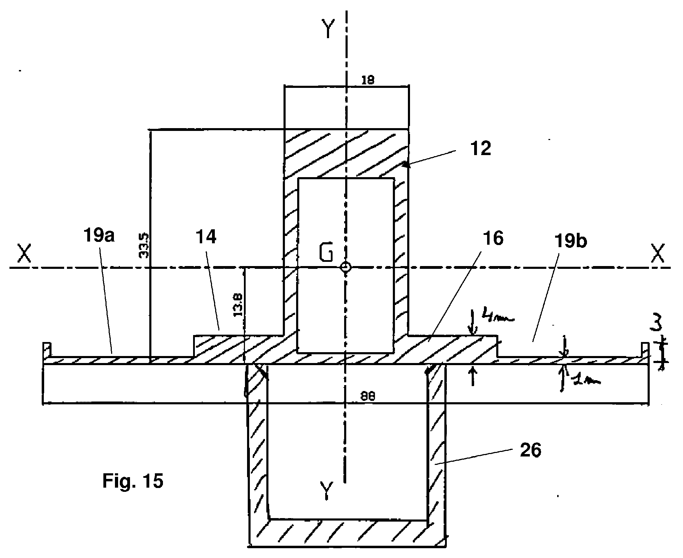

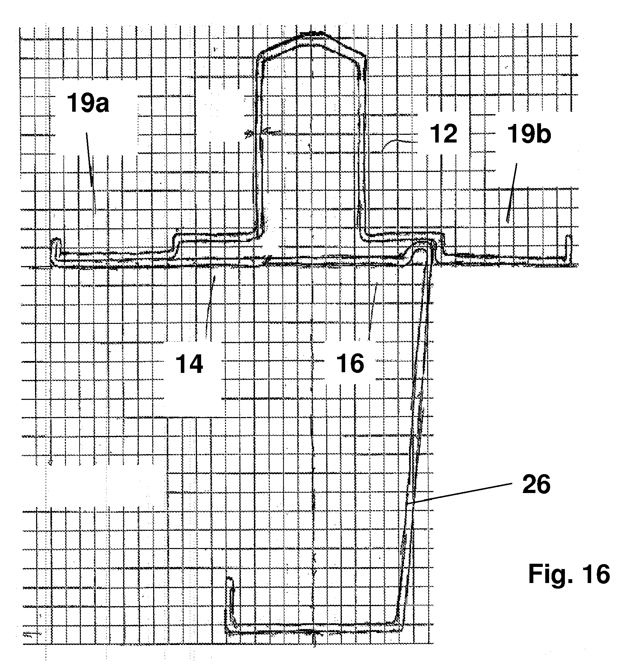

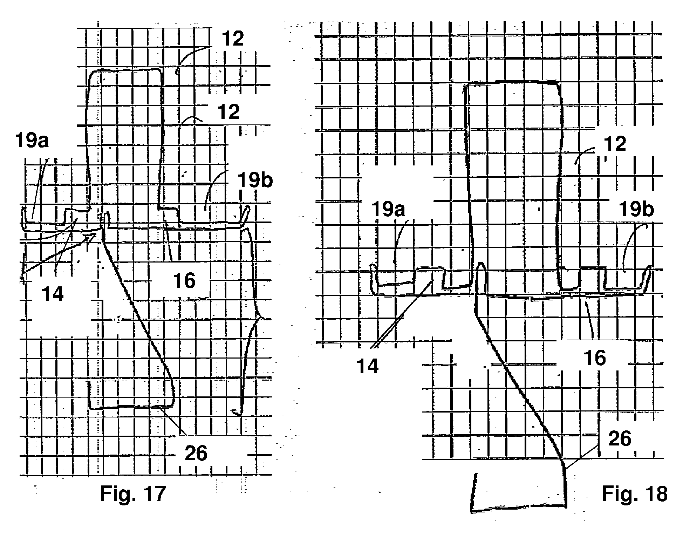

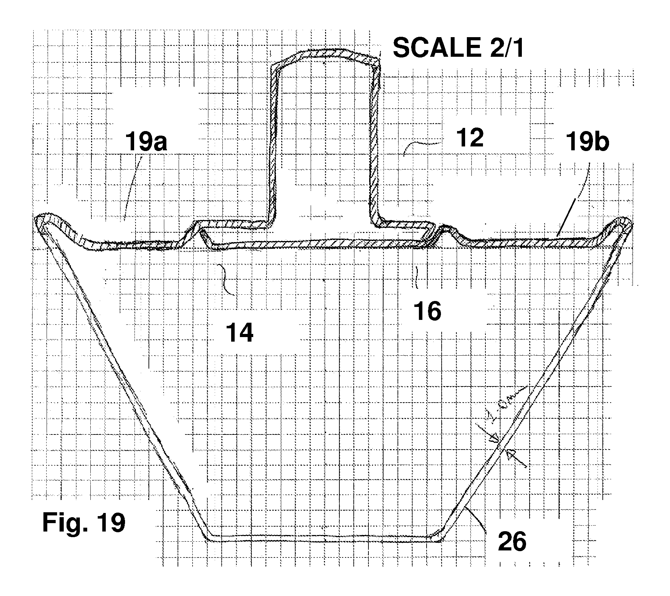

The second support member 12 can also be reinforced by the addition of structural rigidity elements 26 on the underside. Examples are shown in Figs. 14 to 19. In Fig. 14 the second support member shown in Fig. 3b has an additional T-shaped extension 26 at the bottom thus forming a strong I beam with the floor of the tubular upper section. In Fig. 15 a second lower tubular construction 26 is integral with the upper tubular construction. In Fig. 16 a cold rolled profile is shown for the second support member 12. It is cold rolled out of sheet steel and is continuously welded to form the upper tubular section. A lower L-shaped section 26 is also formed that forms a C-shaped profile with the base of the upper tubular section. Figs. 17 and 18 show other designs suitable for cold rolling in which a Z-shaped profile 26 is formed with the base of the upper tubular section. Fig. 19 shows a further design which is suitable for cold rolling in which a second tubular construction 26 is formed below an upper tubular construction. This profile is also formed from sheet steel and is continuously welded to form the upper tubular construction. The lower tubular construction 26 is in the form of a trapezium.

For all the designs shown in Figs. 14 to 19, the section 26 of the profile which lies below the flanges 14, 16 is cut off locally at the overlap zone of an upper and lower row of panels.

In a further modification the weather strip 25 is not a separate item but is made integral with a panel 2 on one side thereof.

## Claims

1. An assembly for forming a cover on a roofing structure comprising panels and horizontal first support members, the assembly comprising:
a plurality of rectangular panels having ends and sides, the panels being for arrangement in a first row and a second row, each panel being enclosed in an outer supporting frame,
second support members for attachment to at least one side of each of the panels, the second support members having outwardly extending flanges at a lower side thereof for support of the sides of the panels, the second support members extending along the complete sides of the panels, and
fixing means for fixing the second support members to an underlying first support member, wherein the second row of panels is for arrangement in a shingled manner with the first row of panels.

2. The assembly of claim 1, wherein the first support members have retaining means distributed along an upper surface of the first support members.

3. The assembly of claim 2, wherein the retaining means is a hook extending away from the first support member and being open so that a flange of the panels locates within the open space of the hook.

4. The assembly of any of the previous claims wherein the first support members have a Z profile, Sigma (Σ) profile, a C or C+ profile.

5. The assembly of any previous claim wherein the second support members have a tubular cross-sectional shape, having two vertical sides, a hollow centre and two outwardly extending bottom flanges.

6. The assembly of claim 5, wherein the second support members have a structurally reinforcing profile that is located on the side of the outwardly extending bottom flanges that is opposite from the vertical walls.

7. The assembly according to claim 5 or 6, wherein the two outwardly extending bottom flanges each include a drainage gutter.

8. The assembly of claim 7, wherein the drainage gutter is arranged in the assembly such that condense water from the underside of a first row of panels or infiltrated water is transferred to the upperside of an adjacent row of panels that lies below the first row of panels.

9. The assembly according to any previous claim further comprising an elastomeric strip for sealing engagement between a lower surface of an upper panel and an upper surface of a lower panel in an overlap zone of the shingled arrangement of panels.

10. The assembly according to any of the previous claims wherein the second support members in an assembly with a first and a second row overlap each other and are attached to each other to form a continuous beam.

11. The assembly according to any of the claims 2 to 10 wherein each panel is locked against sliding movement downwards by at least one hook formed of an upwardly projecting perforation in the flange of the underlaying first support member.

12. The assembly according to any previous claim wherein the second support members of one row of panels are co-linear with second support members in at least one other row.

13. The assembly according to any previous claim mounted on top of a watertight roof.

14. The assembly according to any previous claim wherein the outer supporting frame is metallic.

15. The assembly according to any previous claim wherein the panels are photovoltaic panels, solar heating panels, insulating panels, skylights or mixtures of these.
